# EUROPEAN PATENT APPLICATION

(11) **EP 4 095 092 A1**
(43) Date of publication of application: **30.11.2022**
(21) Application number: 21175858.6
(22) Date of filing: 26.05.2021
(51) Int. Cl.: C01B 21/26, C01B 21/28, C01B 21/38, B01D 53/56

(54) **SYSTEM FOR EVACUATING NOX GASES FROM A NITRIC ACID STORAGE TANK**

(71) Applicant: Yara International ASA, 0277 Oslo (NO)
(72) Inventor: Rösler, Ronald, 3728 Skien (NO); de Smet, Andre, 4535 JH Terneuzen (NL)
(74) Representative: De Clercq & Partners

(57) **Abstract**

The present disclosure relates to a system for evacuating NOₓ gases from a nitric acid storage tank **(2)** in a nitric acid production plant. The system is characterized in that the nitric acid production plant comprises a gas ejector **(10)** comprising at least two gas inlets and at least one gas outlet, wherein:
• a first gas inlet **(11)** of the gas ejector **(10)** is branched from a gas conduit of the nitric acid production plant through which NOₓ-containing gas is flowing at a pressure P1 ranging from 2 bar to 16 bar;
• a second gas inlet **(12)** of the gas ejector **(10)** is fluidically connected to the nitric acid storage tank **(2)** essentially maintained at atmospheric pressure; and
• a gas outlet **(13)** of the gas ejector **(10)** is fluidically connected to a gas conduit of the nitric production plant through which NOₓ-containing gas is flowing at a pressure P2 which is lower than P1.

The present disclosure further relates to a method for evacuating NOₓ gases from a nitric acid storage tank **(2),** in a system **(1)** according to the system **(1)** of the disclosure. The present disclosure also relates to a method for revamping the system of a nitric acid plant according to the prior art into a system according to the system **(1)** of the disclosure. Finally, the present disclosure relates to the use of a gas ejector **(10)** for evacuating NOₓ gases from a nitric acid storage tank **(2)** released therein, in a production plant for producing nitric acid or in a storage area for nitric acid.

## Description

### INTRODUCTION

The current application concerns a system for evacuating NOₓ gases from a nitric acid storage tank released therein, in a production plant for producing nitric acid or in a storage area for nitric acid, as well as to a method for operating such a system.

### BACKGROUND

Pure nitric acid is a clear, colorless liquid with a strong odor. Nitric acid is produced in large quantities principally by catalytic oxidation of ammonia (Ostwald process). Ammonia is converted to nitric acid in two stages. The ammonia is first oxidized in an ammonia burner on platinum gauzes (commonly called ammonia convertor), producing nitric oxide (nitrogen monoxide) and water:

4 NH₃ (g) + 5 O₂ (g) → 4 NO (g) + 6 H₂O (g) (1)

The reaction product from (1), nitric oxide (in this disclosure also called nitrogen monoxide (NO)), following cooling, is then oxidized to nitrogen dioxide (NO₂) and further to dinitrogen tetroxide N₂O₄ (g) in an oxidation section:

2 NO (g) + O₂ (g) → 2 NO₂ (g) (2)

2 NO₂ (g) → N₂O₄ (g) (3)

Cooling of nitrogen oxide gases is accomplished through heat transfer, firstly in waste heat boiler, then a process gas cooler in which condensed nitric acid is separated from nitric oxide, nitrogen dioxide and dinitrogen tetroxide and nitric acid gases, collectively called NOₓ gases, and also by heating in the heater of the tail gas released at the outlet of the absorption tower in which the NOₓ gases are absorbed.

By absorption in water, following compression through a NOₓ-gas compressor, nitrogen dioxide and dinitrogen tetroxide are converted to nitric acid and nitric oxide:

3 NO₂ (g) + H₂O (I) → 2 HNO₃(aq) + NO(g) (4)

3 N₂O₄ (g) + H₂O (I) → 4 HNO₃ (aq) + 2 NO (g) (5)

Weak nitric acid which is up to 68 % (azeotrope) is obtained. Through a rectification process the concentration of nitric acid can be increased up to 99 % concentrated nitric acid. The total reaction is given by the following formula:

NH₃ + 2 O₂ → HNO₃ + H₂O (6)

The main process units in a nitric acid production plant, include an ammonia converter (conversion of ammonia into nitric oxides using oxygen over a suitable catalyst), an oxidation section (conversion of nitric oxide into nitrogen dioxide and nitrogen tetroxide), an absorber unit (for the absorption of NOₓ gases into water) and a bleacher unit (removal of unreacted dissolved gases, containing in particular NOₓ and gases, from the aqueous nitric acid solution, which give it its typical brownish color).

The process for the production of nitric acid can be differentiated into a mono-pressure (single-pressure) and dual pressure (split-pressure) process. In a mono-pressure process, the converter and the absorber unit operate at roughly the same working pressure. Such mono-pressure process generally includes low-pressure (2 to 6 bar) and high-pressure (6 to 16 bar, in particular 9 to 16 bar) processes. In a dual pressure process, the absorber unit operates at a higher working pressure than the ammonia converter. Modern dual pressure processes feature a low-pressure (LP) ammonia converter operating typically at 2 to 6 bar, and a high-pressure (HP) absorber unit operating at 9 to 16 bar. A dual pressure process requires an air compressor to feed low-pressure air to the converter, and a NOₓ gas compressor to feed high-pressure NOx gases to the absorber unit. The working pressure of an air compressor is from 2 to 6 bar, inclusive, and the working pressure of a NOₓ gas compressor is from 9 to 16 bar, inclusive. Hence, while a dual-pressure plant comprises a NOₓ gas compressor, a mono-pressure plant does not.

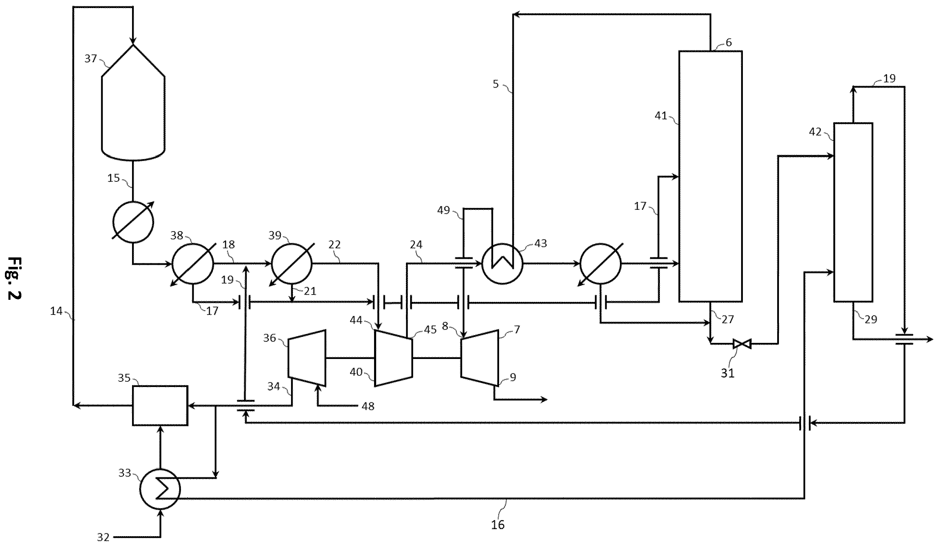

More in detail, referring to Figure 2, a dual pressure plant and process according to the prior art works as follows. Ammonia **32,** optionally pre-heated in a pre-heater unit **33** is mixed with compressed air **34** pressurised to a low pressure using an air compressor **36** operable at a low gas pressure, in a mixing apparatus **35,** and the resulting ammonia/air mixture **14** is fed to an ammonia convertor **37,** operating at a low pressure, where ammonia is oxidized over a suitable catalyst, thus obtaining a LP NOₓ gas/steam mixture **15,** comprising water and NO. The heat of the mixture coming out of the ammonia convertor is recovered, after which the NOₓ gas/stream mixture is subsequently cooled down in a water cooler/condenser **38** to temperature where the water condenses, and an aqueous diluted nitric acid mixture **17** is separated from a gaseous NOₓ stream **18.** The LP gaseous NOₓ stream is further oxidized to further convert the NO to NO₂ and N₂O₄, and cooled down again in a cooler/separator **39** to separate out a aqueous diluted nitric acid mixture **21** which is directed to an absorption tower **41,** commonly called absorption tower. On the other end, the gaseous NOₓ stream **22** is sent to a NOₓ gas compressor **40** wherein its pressure is elevated from a low pressure to a high pressure, being about equal to the absorber unit operating pressure, and the pressurized gaseous NOₓ stream **24** is sent to the absorber unit **41** too. Inside the absorber unit **41,** the HP NOₓ gas reacts with water to produce the tail gas **5** and a stream of raw nitric acid also containing residual NOₓ gas **27,** which is fed to a bleacher **42** over a valve **31.** The residual NOₓ gas is then stripped out with a gaseous medium **16** such as an oxygen-containing gas or air, inside the bleacher unit **42,** operating at low pressure; the bleacher unit is generally operated at about the same pressure as the ammonia convertor. The NOₓ-loaded stripping gas **19** is directed to the oxidation section, upstream of the NOₓ gas compressor **40.** The stripped nitric acid stream **29** from the bleacher unit **42** is then sent to storage for further processing. The drive power for both air compressor **36** and NOₓ gas compressor **40** originates from a tail gas expander **7** and a steam turbine or electric motor (not shown). The heat from the gaseous NOₓ stream **24** is optionally used for heating the tail gas **5** in the tail gas heater **43,** the tail gas heater being therefore optionally present.

Once produced, the acid needs to be stored in a suitable storage tank, in particular in a tank which is made of a material with a low corrosion velocity when containing the nitric acid. The higher the strength, that is the concentration of the acid, the more resistant the material of the storage tank will have to be. Conventional materials for nitric acid storage tanks are stainless steel or alloys-containing stainless steel. As complete bleaching of the nitric acid solution prior to its storage is, in practice, never achieved, this means that there remains unreacted dissolved NOₓ gases in the stored nitric acid, which in turn implies the equilibrium of those NOₓ gases between the solution and the gas phase above the solution in the storage tank.

An issue with conventional storage tanks is that, in the absence of complete sealing, NOₓ gases released from the stored nitric acid solution can result in leakages of NOₓ gases in the environment of the nitric acid storage tank. Consequently, this represents a hazard for the personnel working in the surrounding of the storage tank as those NOₓ gases can be the cause of lung oedema and irritation.

In order to treat the NOₓ gases from nitric acid storage tanks, there exists solutions disclosed in the prior art. One such solution is disclosed in CN210559392 U (Shanghai Fubao Port Co Ltd, 2019). In this utility model, a water-sealed tank is connected to the nitric acid storage tank in order for the water in the water-sealed tank to absorb the NOₓ gases released in the nitric acid storage tank. The top of the first water-sealed tank is connected with a first water replenishing valve. The side surface of the first water-sealed tank is provided with a first discharge valve. A first air aeration pipe and a first tail gas aeration pipe are introduced below the liquid level in the first water-sealed tank and the installation height of the first air aeration pipe is lower than that of the first tail gas aeration pipe. The model also comprises an industrial water supply mechanism and a compressed air source.

The utility model CN205627538 U (2016) also describes a nitric acid tail gas absorbing device. The device is connected to a negative pressure pump. The connection to a negative pressure pump is further connected to a water sprayer pipe through one end of the negative pressure pump and the other end of the negative tube inserts in the nitric acid storage tank.

There remains a need to simplify the conventional systems of the prior art in which NOₓ gases from nitric acid storage tanks are neutralized by washing with water. It is a goal of the present disclosure to provide a system that is simplified with respect to the systems of the prior art and which, as a result, has a lower area footprint, is cheaper and easier to operate.

### BRIEF DESCRIPTION OF THE INVENTION

The invention concerns a system for evacuating NOₓ gases from a nitric acid storage tank released therein, in a production plant for producing nitric acid or in a storage area for nitric acid, as well as to a method for operating such a system, using a gas ejector device.

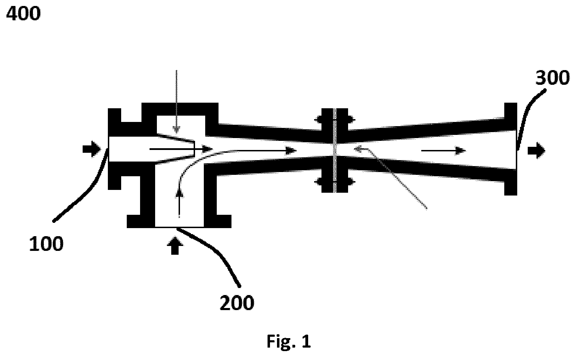

Reference is made to Figure 1. A gas ejector **400** device comprises a first inlet for a high-pressure gas **100,** called the motive gas, and a second inlet for a low-pressure gas **200** that is to be drawn into the device where it is mixed with the motive gas. The resulting gas mixture is expelled at the outlet **300** at a pressure between the high-pressure of the motive gas and the low-pressure of the inlet gas. The expelled gas can be expelled into the open air, or can be transported through a conduit to a further location downstream the gas ejector device.

The inventors have now realized that such a gas ejector device can be used advantageously to evacuate gases from a liquid storage tank, in particular the NOₓ gases from a nitric acid storage tank, in a nitric acid production plant or in a storage area for nitric acid, by using the tail gas generated in an absorption column, or an NOₓ-containing gas upstream the absorption tower, as the motive gas to drive the gas ejector to draw the NOₓ gases out of a nitric acid storage tank, and to evacuate these NOₓ gases as well as the NOₓ-containing tail gas. In addition, the use of such ejector device allows for abating the NOₓ gases from a nitric storage tank using a small area footprint and at lower costs than with a conventional scrubber device.

### DETAILED DESCRIPTION

Throughout the description and claims of this specification, the words "comprise" and variations thereof mean "including but not limited to", and they are not intended to (and do not) exclude other moieties, additives, components, integers or steps. Throughout the description and claims of this disclosure, the singular encompasses the plural unless the context otherwise requires. In particular, where the indefinite article is used, the disclosure is to be understood as contemplating plurality as well as singularity, unless the context requires otherwise.

Features, integers, characteristics, compounds, chemical moieties, or groups described in conjunction with a particular aspect, embodiment or example of the disclosure are to be understood to be applicable to any other aspect, embodiment or example described herein unless incompatible therewith. All of the features disclosed in this disclosure (including the description, claims, abstract and drawings), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this disclosure

(including the description, claims, abstract and drawings), or to any novel one, or any novel combination, of the steps of any method or process so disclosed.

The enumeration of numeric values by means of ranges of figures comprises all values and fractions in these ranges, as well as the cited end points. The term "ranges from ... to " as used when referring to a range for a measurable value, such as a parameter, an amount, a time period, and the like, is intended to include the limits associated to the range that is disclosed.

As defined herein a gas inlet that is "branched from" means that the inlet only receives the gas from the conduit to which it is branched from, divided from or split from.

### List of figures

**Figure 1** shows a conventional gas ejector device
**Figure 2** shows a schematic representation of a dual nitric acid plant
**Figure 3** shows a schematic representation of an embodiment of the system of the disclosure
**Figure 4** shows a schematic representation of an embodiment of the system of the disclosure
**Figure 5** shows a schematic representation of an embodiment of the system of the disclosure
**Figure 6** shows a schematic representation of an embodiment of the system of the disclosure

**Table of numerals**

| | |
|---|---|
| **1** | system according to the disclosure |
| **2** | nitric acid storage tank |
| **3** | outlet of nitric acid storage tank |
| **5** | tail gas |
| **6** | outlet of nitric acid absorption tower |
| **7** | tail gas expander |
| **8** | inlet of tail gas expander |
| **9** | outlet of tail gas expander |
| **10** | ejector as used in the disclosure |
| **11** | first inlet of the gas ejector as used in the disclosure |
| **12** | second inlet of the gas ejector as used in the disclosure |
| **13** | outlet of the gas ejector as used in the disclosure |
| **14** | ammonia/air mixture |
| **15** | low-pressure NOₓ gas/steam mixture |
| **16** | gaseous stripping medium |
| **17** | aqueous diluted nitric acid mixture |
| **18** | gaseous NOₓ stream |
| **19** | NOₓ-loaded stripping gas |
| **21** | aqueous diluted nitric acid mixture |
| **22** | gaseous NOₓ stream |
| **24** | pressurized gaseous NOₓ stream |
| **27** | stream of raw nitric acid-containing residual NOₓ gas |
| **29** | stripped nitric acid stream |
| **31** | valve |
| **32** | ammonia |
| **33** | pre-heater |
| 34 | compressed air |
| 35 | mixing apparatus |
| 36 | air compressor |
| 37 | ammonia converter |
| **38** | water cooler/condenser |
| **39** | cooler/separator |
| **40** | NOₓ gas compressor |
| **41** | absorption tower |
| **42** | bleacher unit |
| **43** | tail gas heater |
| **44** | NOₓ gas compressor inlet |
| **45** | NOₓ gas compressor outlet |
| **46** | tail gas heater inlet |
| **47** | tail gas heater outlet |
| **48** | air |
| **49** | heated tail gas |
| **100** | conventional gas ejector |
| **200** | first inlet for a high-pressure gas in a conventional gas ejector |
| **300** | second inlet for a low-pressure gas in a conventional gas ejector |
| **400** | outlet in conventional ejector |

### System for evacuating NOₓ gases from a nitric acid storage tank

In one aspect of the disclosure, a system for evacuating NOₓ gases from a nitric acid storage tank in a nitric acid production plant, is disclosed. The system is characterized in that the nitric acid production plant comprises a gas ejector comprising at least two gas inlets and at least one gas outlet, wherein:
- a first gas inlet of the gas ejector is branched from a gas conduit of the nitric acid production plant through which NOₓ-containing gas is flowing at a pressure P1 ranging from 2 bar to 16 bar;
- a second gas inlet of the gas ejector is fluidically connected to the nitric acid storage tank essentially maintained at atmospheric pressure; and
- a gas outlet of the gas ejector is fluidically connected to a gas conduit of the nitric production plant through which NOₓ-containing gas is flowing at a pressure P2 which is lower than P1.

The inventors have now established that this is possible to use a gas ejector to evacuate the NOₓ gases from a storage tank containing nitric acid. As there are gases at a pressure of at least 2 bar in the nitric acid process suitable for use as a motive gas and the gases from the storage tank are at atmospheric pressure, it is possible to use a gas ejector in combination with these two types of gases. The result is that the gases of the storage tank are evacuated and, instead of spreading in the surroundings of the storage tank, they are diluted, hence treated, through dilution using the tail gas, at the outlet of the gas ejector. In this way, not only are the gases of the storage tank evacuated, they are also handled in a manner that does not involve the washing of the NOₓ gases with water, as is commonly done, for example through the use of scrubbing systems. Therefore, the system of the disclosure, when compared to the systems of the prior art, is simplified, has a smaller area footprint and is cheaper.

The person skilled in the art will understand that what is required in the system of the disclosure is the presence of a gas that can act as a motive gas in a gas ejector and of an acid storage tank in which gases at a low pressure are released. Further, in the gas conduit in fluid communication with the outlet of the gas ejector, that is in the gas conduit where the gases leaving the gas ejector are released, the pressure should be lower than the pressure of the motive gas, such that a pressure drop is created, resulting in under-pressure in the storage tank, in turn resulting in the proper functioning of the gas ejector, meaning that the NOₓ gases released in the storage tank are evacuated out of the storage tank, and to a safe location. As long as those criteria associated with the motive gas and with the pressure drop are met, the production plant needs not be a nitric acid plant specifically. Therefore, the system of the disclosure can be to the system of any process comprising a gas that can be used as a motive gas and low pressure gases in a storage tank that are to be evacuated.

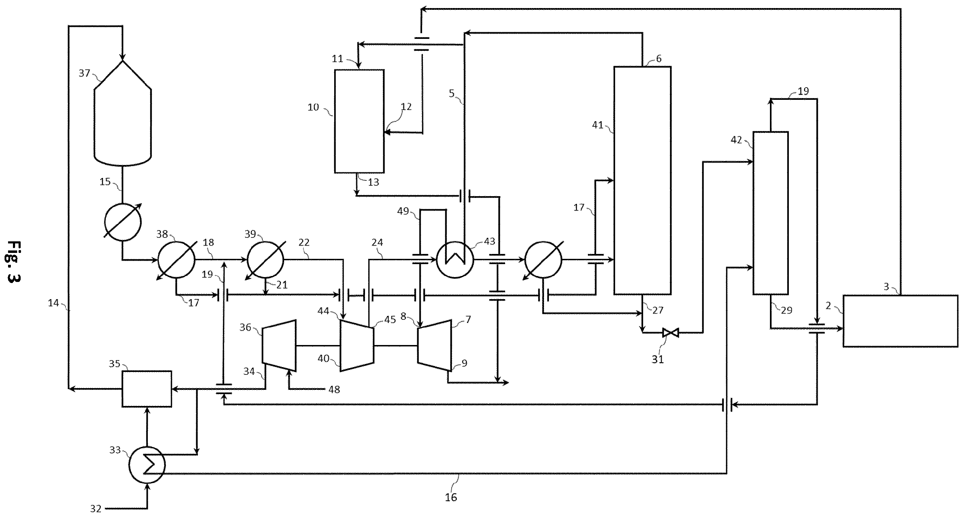

Reference is made to Figures 3 to 6. In one aspect of the disclosure, a system for evacuating NOₓ gases from the nitric acid storage tank **2** in a nitric acid production plant, is disclosed. The system is characterized in that the nitric acid production plant comprises the gas ejector **10** comprising at least two gas inlets and at least one gas outlet, wherein:
- the first gas inlet **11** of the gas ejector **10** is branched from a gas conduit of the nitric acid production plant through which NOₓ-containing gas is flowing at a pressure P1 ranging from 2 bar to 16 bar;
- the second gas inlet **12** of the gas ejector **10** is fluidically connected to the nitric acid storage tank **2** essentially maintained at atmospheric pressure; and
- the gas outlet **13** of the gas ejector **10** is fluidically connected to a gas conduit of the nitric production plant through which NOₓ-containing gas is flowing at a pressure P2 which is lower than P1.

The inventors have now established that this is possible to use a gas ejector **10** to evacuate the NOₓ gases from a storage tank **2** containing nitric acid. As there are gases at a pressure of at least 2 bar in the nitric acid process suitable for use as a motive gas and the gases from the storage tank **2** are at atmospheric pressure, it is possible to use the gas ejector **10** in combination with these two types of gases. The result is that the gases of the storage tank **2** are evacuated and, instead of spreading in the surroundings of the storage tank **2,** they are diluted, hence handled, through dilution using the tail gas, at the outlet of the gas ejector. In this way, not only are the gases of the storage tank **2** evacuated, they are also handled in a manner that does not involve the washing of the NOₓ gases with water, as is commonly done, for example through the use of scrubbing systems. Therefore, the method of the disclosure, when compared to the methods of the prior art, is simplified and cheaper, due to the simple and cheap operation of the gas ejector **10.**

In one embodiment according to the system of the disclosure, the first gas inlet of the gas ejector is branched from a gas conduit downstream from an absorption tower having an outlet from which a NO*x*-containing tail gas is obtained, through which the tail gas is flowing, and the gas outlet of the gas ejector is fluidically connected to a gas conduit downstream from a tail gas expander for expanding the tail gas and/or downstream from a tail gas heater for heating the tail gas to a temperature ranging from 200 to 650°C, thereby generating a heated tail gas.

As defined herein, a tail gas heater is a system which comprises one or more, such as one to four, heaters installed in series, for gradually heating the tail gas from a temperature ranging from 2 °C to 50 °C, to a temperature ranging from 200 °C to 650 °C, thereby generated a heated tail gas.

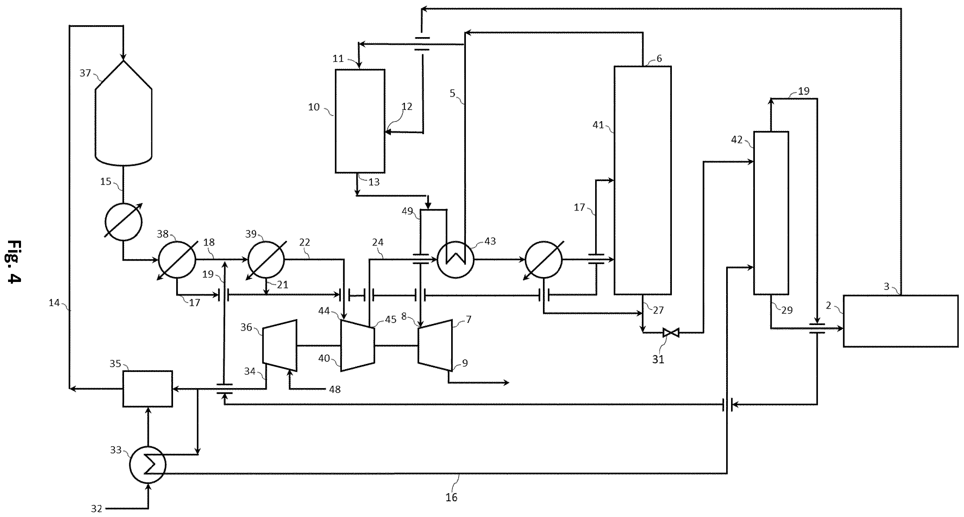

Reference is made to Figures 3 and 4. In one embodiment according to the system of the disclosure, the first gas inlet **11** of the gas ejector **10** is branched from the gas conduit downstream from the absorption tower **41** having the outlet **6** from which the NO*x*-containing tail gas **5** is obtained, through which the tail gas **5** is flowing, and the gas outlet **13** of the gas ejector **10** is fluidically connected to the gas conduit downstream from the tail gas expander **7** for expanding the tail gas **5** and/or downstream from the tail gas heater **43** for heating the tail gas **5** to a temperature ranging from 200 to 650°C, thereby generating the heated tail gas **49.**

As defined herein, the tail gas heater **43** is a system which comprises one or more, such as one to four, heaters installed in series, for gradually heating the tail gas from a temperature ranging from 2 °C to 50 °C, to a temperature ranging from 200 °C to 650 °C, thereby generating the heated tail gas **49.**

In one embodiment according to the system of the disclosure, the first gas inlet of the gas ejector is branched from a gas conduit downstream from a tail gas heater for heating a NOₓ-containing tail gas obtained from an outlet of an absorption tower to a temperature ranging from 200 to 650°C, thereby generating a heated tail gas, and the gas outlet of the gas ejector is fluidically connected to a gas conduit downstream from a tail gas expander for expanding the heated tail gas.

As defined herein, a tail gas heater is a system which comprises one or more, such as one to four, heaters installed in series, for gradually heating the tail gas from a temperature ranging from 2 °C to 50 °C, to a temperature ranging from 200 °C to 650 °C, thereby generating a heated tail gas.

The person skilled in the art will understand that, since the tail gas heater comprises one or more heaters in series, it is possible to have the first inlet of the tail gas ejector downstream a first heater of the tail gas heater, and the outlet of the gas ejector is in fluid communication with the outlet of a second heater of the tail gas heater, as long as the second heater is located downstream the first heater - that is as long as there is the necessary pressure drop between the gas conduit in fluid communication with the first inlet of the gas ejector and the gas conduit in fluid communication with the outlet of the gas ejector.

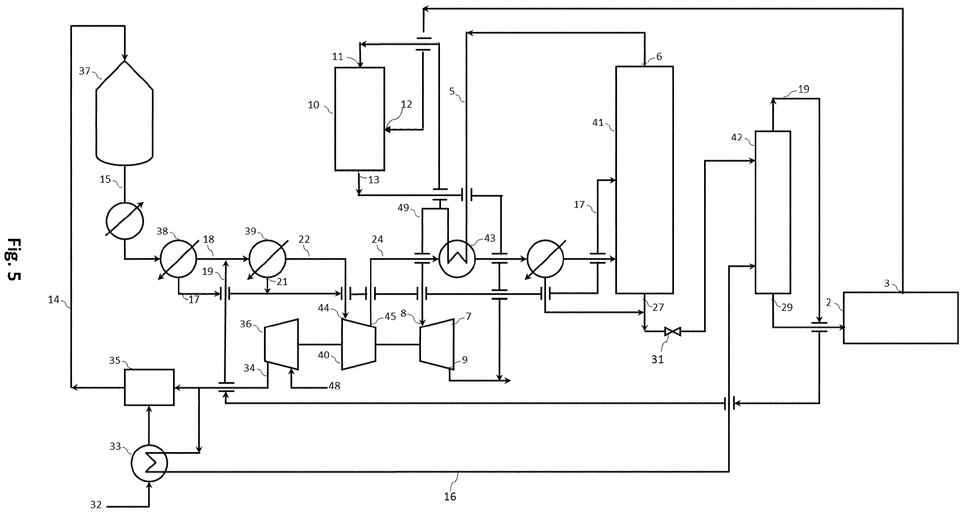

Reference is made to Figure5. In one embodiment according to the system of the disclosure, the first gas inlet **11** of the gas ejector **10** is branched from the gas conduit downstream from the tail gas heater **43** for heating the NOₓ-containing tail gas **5** obtained from the outlet of the absorption tower **41** to a temperature ranging from 200 to 650°C, thereby generating the heated tail **49,** and the gas outlet **13** of the gas ejector **10** is fluidically connected to the gas conduit downstream from the tail gas expander **7** for expanding the heated tail gas **(49).**

As defined herein, the tail gas heater **43** is a system which comprises one or more, such as one to four, heaters installed in series, for gradually heating the tail gas from a temperature ranging from 2 °C to 50 °C, to a temperature ranging from 200 °C to 650 °C, thereby generating the heated tail gas **49.**

The person skilled in the art will understand that, since the tail gas heater **43** comprises one or more heaters in series, it is possible to have the first inlet **11** of the tail gas ejector **10** downstream a first heater of the tail gas heater **43,** and the outlet **13** of the ejector **10** is in fluid communication with the outlet of a second heater of the tail gas heater **43,** as long as the second heater is located downstream the first heater - that is as long as there is the necessary pressure drop between the gas conduit in fluid communication with the first inlet **11** of the ejector **10** and the gas conduit in fluid communication with the outlet **13** of the ejector **10.**

In one embodiment according to the system of the disclosure, the first gas inlet of the gas ejector is branched from a gas conduit downstream from a NOₓ gas compressor and upstream from an absorption tower, and the gas outlet of the gas ejector is fluidically connected to a gas conduit upstream from the NOₓ gas compressor.

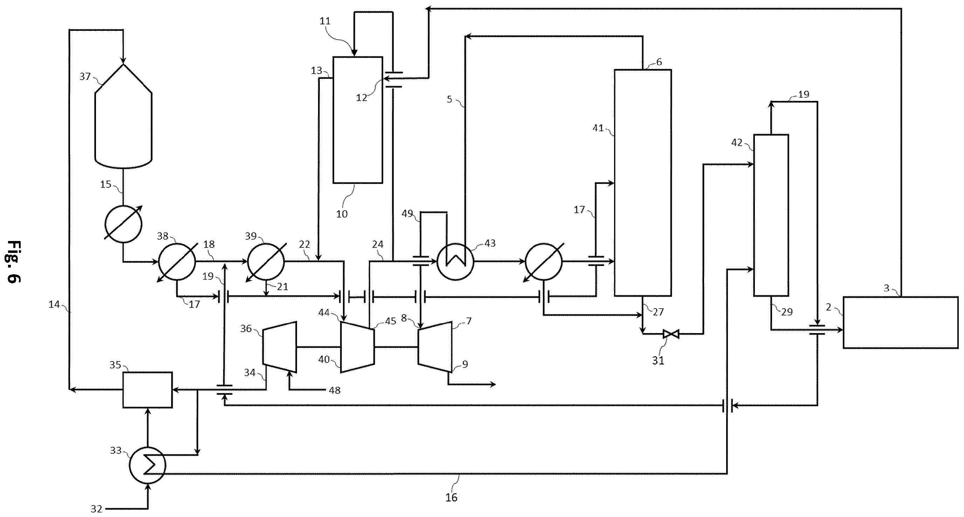

Reference is made to Figure 6. In one embodiment according to the system of the disclosure, the first gas inlet **11** of the gas ejector **10** is branched from the gas conduit downstream from the NOₓ gas compressor **40** and upstream from the absorption tower **41,** and the gas outlet **13** of the gas ejector **10** is fluidically connected to a gas conduit upstream from the NOₓ gas compressor **40.**

In one embodiment according to the system of the disclosure, the pressure P1 ranges from 4 bar to 16 bar.

The higher the pressure of the motive gas directed to the first inlet of the gas ejector, the higher the pressure drop between the gas conduit in fluid communication with the first inlet of the gas ejector and the gas conduit in fluid communication with outlet of the gas ejector will be, resulting in higher under-pressure above the storage tank, hence in a more efficient evacuation of the NOₓ gases released in the storage tank.

Reference is made to Figures 3 to 6. In one embodiment according to the system of the disclosure, the pressure P1 ranges from 4 bar to 16 bar.

The higher the pressure of the motive gas directed to the first inlet **11** of the gas ejector **10,** the higher the pressure drop between the gas conduit in fluid communication with the first inlet **11** of the ejector **10** and the gas conduit in fluid communication with outlet **13** of the ejector **10** will be, resulting in higher under-pressure above the storage tank **2,** hence in a more efficient evacuation of the NOx gases released in the storage tank **2.**

In one embodiment according to the system of the disclosure, the system further comprises a tail gas treatment unit located downstream from an absorption tower and/or downstream from a tail gas expander.

The addition of such tail gas treatment unit (not shown) allows for a reduction of the emissions downstream the tail gas expander. Indeed, the lower the concentration on NOₓ gases at the tail gas expander inlet or downstream the tail gas expander outlet, and upstream the location of the release of the gases to the atmosphere, the lower the concentration in NOₓ gases of the gases that are released to the atmosphere. Therefore, the use of a tail gas treatment unit results in enhanced control of the emissions from the nitric acid production plant.

Reference is made to Figures 3 and 6. In one embodiment according to the system of the disclosure, the system further comprises a tail gas treatment unit (not shown) located downstream from the absorption tower **(41)** and/or downstream from the tail gas expander **(7).**

The addition of such tail gas treatment unit (not shown) allows for a reduction of the emissions downstream the tail gas expander **7.** Indeed, the lower the concentration on NOₓ gases at the tail gas expander inlet **8** or downstream the tail gas expander outlet **9,** and upstream the location of the release of the gases to the atmosphere, the lower the concentration in NOₓ gases of the gases that are released to the atmosphere. Therefore, the use of a tail gas treatment unit results in enhanced control of the emissions from the nitric acid production plant.

### Method for evacuating NOₓ gases from a nitric acid storage tank

In another aspect of the disclosure, a method for evacuating NOₓ gases from a nitric acid storage tank in a nitric acid production plant, wherein a first NOₓ-containing gas from a gas conduit of the nitric acid production plant a at a pressure P1 ranging from 2 bar to 16 bar and a second NOₓ-containing gas from the nitric acid storage tank at atmospheric pressure are respectively flown in through a first inlet and a second inlet of a gas ejector and flown out to a gas conduit of the nitric production plant through which a NOₓ-containing gas is flowing at a pressure P2 which is lower than P1, is disclosed.

The inventors have now established that this is possible to use a gas ejector to evacuate the NOₓ gases from a storage tank of a nitric acid. As there are gases at a pressure of at least 2 bar in the nitric acid process suitable for use as a motive gas and the gases from the storage tank are at atmospheric pressure, it is possible to use a gas ejector in combination with these two types of gases. The result is that the gases of the storage tank are evacuated and, instead of spreading in the surroundings of the storage tank, they are diluted, hence handled, through dilution using the tail gas, at the outlet of the gas ejector. In this way, not only are the gases of the storage tank evacuated, they are also handled in a manner that does not involve the washing of the NOₓ gases with water, as is commonly done, for example through the use of scrubbing systems. Therefore, the method of the disclosure, when compared to the methods of the prior art, is simplified and cheaper, due to the simple and cheap operation of the gas ejector.

The person skilled in the art will understand that what is required to apply the method of the disclosure is the presence of a tail gas that can act as a motive gas in a gas ejector and of an acid storage tank in which gases at a low pressure are released. Further, in the gas conduit in fluid communication with the outlet of the gas ejector, that is in the gas conduit where the gases leaving the gas ejector are released, the pressure should be lower than the pressure of the motive gas, such that a pressure drop is created, resulting in under-pressure in the storage tank, in turn resulting in the proper functioning of the gas ejector, meaning that the gases released in the storage tank are actually directed out of the storage tank, and at a safe location. As long as those criteria associated with the motive gas and with the pressure drop are met, the process needs not be nitric acid specifically. Therefore, the system of the disclosure can be applied to any process comprising a gas that can be used as a motive gas and low pressure gases in a storage tank that are to be evacuated.

Reference is made to Figures 3 and 6. In another aspect of the disclosure, a method for evacuating NOₓ gases from the nitric acid storage tank **2** in a nitric acid production plant, wherein a first NOₓ-containing gas from a gas conduit of the nitric acid production plant a at a pressure P1 ranging from 2 bar to 16 bar and a second NOₓ-containing gas from the nitric acid storage tank **2** at atmospheric pressure are respectively flown in through the inlets **11** and **12** of the gas ejector **10** and flown out to a gas conduit of the nitric production plant through which a NOₓ-containing gas is flowing at a pressure P2 which is lower than P1, is disclosed.

The inventors have now established that this is possible to use a gas ejector **10** to evacuate the NOₓ gases from a storage tank **2** containing nitric acid. As there are gases at a pressure of at least 2 bar in the nitric acid process suitable for use as a motive gas and the gases from the storage tank **2** are at atmospheric pressure, it is possible to use the gas ejector **10** in combination with these two types of gases. The result is that the gases of the storage tank **2** are evacuated and, instead of spreading in the surroundings of the storage tank **2,** they are diluted, hence handled, through dilution using the tail gas, at the outlet of the gas ejector. In this way, not only are the gases of the storage tank **2** evacuated, they are also handled in a manner that does not involve the washing of the NOₓ gases with water, as is commonly done, for example through the use of scrubbing systems. Therefore, the method of the disclosure, when compared to the methods of the prior art, is simplified and cheaper, due to the simple and cheap operation of the gas ejector **10.**

In one embodiment according to the method of the disclosure, the first NOₓ-containing gas is a tail gas obtained from an outlet of an absorption tower and the outflowing gas stream of the gas ejector flows to a gas conduit downstream from a tail gas expander for expanding the tail gas and/or downstream from a tail gas heater for heating the tail gas to a temperature ranging from 200 to 650°C, thereby generating a heated tail gas.

Reference is made to Figures 3 and 4. In one embodiment according to the method of the disclosure, the first NOₓ-containing gas is the tail gas **(5)** obtained from the outlet **(6)** of the absorption tower **(41)** and the outflowing gas stream of the gas ejector **(10)** flows to the gas conduit downstream from the tail gas expander **(7)** for expanding the tail gas **(5)** and/or downstream from the tail gas heater **(43)** for heating the tail gas **(5)** to a temperature ranging from 200 to 650°C, thereby generating the heated tail gas **(49).**

In one embodiment according to the method of the disclosure, the first NOₓ-containing gas is obtained from a gas conduit downstream from a tail gas heater for heating a tail gas obtained from an outlet of an absorption tower to a temperature ranging from 200 to 650°C, thereby generating a heated tail gas, and the outflowing gas stream of the gas ejector flows to a gas conduit downstream from a tail gas expander for expanding the heated tail gas.

The person skilled in the art will understand that, since the tail gas heater comprises one or more heaters in series, it is possible to have the first inlet of the tail gas ejector downstream a first heater of the tail gas heater, and the outlet of the gas ejector is in fluid communication with the outlet of a second heater of the tail gas heater, as long as the second heater is located downstream the first heater - that is as long as there is the necessary pressure drop between the gas conduit in fluid communication with the first inlet of the gas ejector and the gas conduit in fluid communication with the outlet of the gas ejector.

Reference is made to Figure 5. In one embodiment according to the method of the disclosure, the first NOₓ-containing gas is obtained from the gas conduit downstream from a tail gas heater **43** for heating the tail gas **5** obtained from the outlet **6** of the absorption tower **41** to a temperature ranging from 200 to 650°C, thereby generating the heated tail gas **49,** and the outflowing gas stream of the gas ejector **(10)** flows to a gas conduit downstream from a tail gas expander **(7)** for expanding the heated tail gas **(49).**

The person skilled in the art will understand that, since the tail gas heater **43** comprises one or more heaters in series, it is possible to have the first inlet **11** of the tail gas ejector **10** downstream a first heater of the tail gas heater **43,** and the outlet **13** of the gas ejector **10** is in fluid communication with the outlet of a second heater of the tail gas heater **43,** as long as the second heater is located downstream the first heater - that is as long as there is the necessary pressure drop between the gas conduit in fluid communication with the first inlet **11** of the gas ejector **10** and the gas conduit in fluid communication with the outlet **13** of the gas ejector **10.**

In one embodiment according to the method of the disclosure, the first NOₓ-containing gas is obtained from a gas conduit downstream from a NOₓ gas compressor and upstream from an absorption tower, and the outflowing gas stream of the gas ejector flows to a gas conduit upstream from the NOₓ gas compressor.

Reference is made to Figure 6. In one embodiment according to the method of the disclosure, the first NOₓ-containing gas is obtained from the gas conduit downstream from the tail gas heater **43** for heating the tail gas **5** obtained from the outlet **6** of the absorption tower **41** to a temperature ranging from 200 to 650°C, thereby generating the heated tail gas **49,** and the outflowing gas stream of the gas ejector **10** flows to the gas conduit downstream from a tail gas expander **7** for expanding the heated tail gas **49.**

In one embodiment according to the method of the disclosure, the pressure P1 ranges from 4 bar to 16 bar.

The higher the pressure of the motive gas directed to the first inlet of the gas ejector, the higher the pressure drop between the gas conduit in fluid communication with the first inlet of the gas ejector and the gas conduit in fluid communication with outlet of the gas ejector will be, resulting in higher under-pressure above the storage tank, hence in a more efficient evacuation of the NOₓ gases generated in the storage tank.

Reference is made to Figures 3 to 6. In one embodiment according to the method of the disclosure, the pressure P1 ranges from 4 bar to 16 bar.

The higher the pressure of the motive gas directed to the first inlet **11** of the gas ejector **10,** the higher the pressure drop between the gas conduit in fluid communication with the first inlet **11** of the ejector **10** and the gas conduit in fluid communication with outlet **13** of the ejector **10** will be, resulting in higher under-pressure above the storage tank **2,** hence in a more efficient evacuation of the NOx gases released in the storage tank **2.**

In one embodiment according to the method of the disclosure, the method further comprises the step of treating a tail gas downstream from an absorption tower and/or downstream from a tail gas expander.

Such treatment of the tail gas allows for a reduction of the emissions downstream the tail gas expander. Indeed, the lower the concentration on NOₓ gases at the tail gas inlet or downstream the tail gas outlet and upstream the location of the release of the gases to the atmosphere, the lower the concentration in NOₓ gases of the gases leaving the gas ejector is. As a result, the lower the concentration on NOₓ gases in the tail gas is, the lower the concentration in NOₓ gases that are released to the atmosphere. Therefore, the treatment of the tail gas results in enhanced control of the emissions from the nitric acid production plant.

Reference is made to Figures 3 to 6. In one embodiment according to the method of the disclosure, the method further comprises the step of treating the tail gas **5** downstream from the absorption tower **41** and/or downstream from the tail gas expander **7.**

Such treatment of the tail gas allows for a reduction of the emissions downstream the tail gas expander **7.** Indeed, the lower the concentration on NOₓ gases at the tail gas expander inlet **8** or downstream the tail gas expander outlet **9,** and upstream the location of the release of the gases to the atmosphere, the lower the concentration in NOₓ gases of the gases that are released to the atmosphere. Therefore, the use of a tail gas treatment unit results in enhanced control of the emissions from the nitric acid production plant.

In one embodiment according to the method of the disclosure, the method is a periodical or continuous process.

### Method for revamping a system for evacuating NOₓ gases from a nitric acid storage tank into a system according to the disclosure

In another aspect of the disclosure, a method for revamping a nitric acid production plant comprising the step of installing a gas ejector for executing the method of the disclosure, is disclosed.

Reference is made to Figures 2 and 6. In another aspect of the disclosure, a method for revamping a nitric acid production plant comprising the step of installing the gas ejector **10** for executing the method the disclosure, is disclosed.

### Use of a gas ejector in a nitric acid plant for evacuating NOₓ gases from a nitric acid storage tank

In another aspect of the disclosure, the use of a gas ejector for evacuating NOₓ gases from a nitric acid storage tank, in a production plant for producing nitric acid, is disclosed.

Reference is made to Figures 3 to 6. In another aspect of the disclosure, the use of the gas ejector **(10)** for evacuating NOₓ gases from the nitric acid storage tank **(2),** in a production plant for producing nitric acid, is disclosed.

### Example

Reference is made to Figures 3. The NOₓ gas **22** was compressed in the NOₓ gas compressor **40,** thereby generating the compressed NOₓ gas **24** at a pressure of 11 bar. The compressed NOₓ gas **24** was absorbed in the absorption tower **41,** thereby generating the tail gas **5** having a pressure ranging of 10 bar and a stream of raw nitric acid **27** that was treated in the bleacher **42** out of which nitric acid was sent to the storage tank **2.** The tail gas **5** was heated in the tail gas heater inlet **46,** thereby generating a heated tail gas having a temperature of 450 °C and a pressure of 9.5 bar at the tail gas heater outlet **47.**

The pressure at the nitric acid storage tank outlet **3** equaled atmospheric pressure. The NOₓ gases from the nitric acid storage tank **2** were directed, through the storage tank outlet **3,** to the second inlet **12** of the gas ejector **10.** Part of the tail gas **5** at the tail gas expander outlet **6** of the absorption tower **41,** was directed to the first inlet of the gas ejector **11.** The gases directed to both inlets **11** and **12** of the gas ejector **10** were mixed and ejected at the outlet **13** of the gas ejector **10** which was in fluid communication with a gas conduit located the tail expander outlet **9.** The part of the tail gas **5** not directed to the first inlet **11** of the gas ejector **10** was directed to the inlet of the tail gas expander **8** and was mixed with the tail gas ejected from the gas ejector **10** at the outlet **13,** to a gas conduit downstream the tail gas expander outlet **9.** The NOₓ emissions in this latter conduit were 600 ppm. With the presence of a treatment unit downstream the absorption tower **41** and upstream the tail gas expander **7,** the NOₓ emissions were reduced to below 50 ppm.

## Claims

1. A system **(1)** for evacuating NOₓ gases from a nitric acid storage tank **(2)** in a nitric acid production plant, **characterized in that** the nitric acid production plant comprises a gas ejector **(10)** comprising at least two gas inlets and at least one gas outlet, wherein:
• a first gas inlet **(11)** of the gas ejector **(10)** is branched from a gas conduit of the nitric acid production plant through which NOₓ-containing gas is flowing at a pressure P1 ranging from 2 bar to 16 bar;
• a second gas inlet **(12)** of the gas ejector **(10)** is fluidically connected to the nitric acid storage tank **(2)** essentially maintained at atmospheric pressure; and
• a gas outlet **(13)** of the gas ejector **(10)** is fluidically connected to a gas conduit of the nitric production plant through which NOₓ-containing gas is flowing at a pressure P2 which is lower than P1.

2. The system **(1)** according to claim 1 wherein the first gas inlet **(11)** of the gas ejector **(10)** is branched from a gas conduit downstream from an absorption tower **(41)** having an outlet **(6)** from which a NO*x*-containing tail gas **(5)** is obtained, through which the tail gas **(5)** is flowing, and wherein the gas outlet **(13)** of the gas ejector **(10)** is fluidically connected to a gas conduit downstream from a tail gas expander **(7)** for expanding the tail gas **(5)** and/or downstream from a tail gas heater **(43)** of the nitric acid production plant for heating the tail gas **(5)** to a temperature ranging from 200 to 650°C, thereby generating a heated tail gas **(49).**

3. The system **(1)** according to claim 1 wherein the first gas inlet **(11)** of the gas ejector **(10)** is branched from a gas conduit downstream from a tail gas heater **(43)** for heating a NOₓ-containing tail gas **(5)** obtained from an outlet **(6)** of an absorption tower **(41)** to a temperature ranging from 200 to 650°C, thereby generating a heated tail gas **(49),** and wherein the gas outlet **(13)** of the gas ejector **(10)** is fluidically connected to a gas conduit downstream from a tail gas expander **(7)** for expanding the heated tail gas **(49).**

4. The system **(1)** according to claim 1 wherein the first gas inlet **(11)** of the gas ejector **(10)** is branched from a gas conduit downstream from a NOₓ gas compressor **(40)** and upstream from an absorption tower **(41),** and wherein the gas outlet **(13)** of the gas ejector **(10)** is fluidically connected to a gas conduit upstream from the NOₓ gas compressor **(40).**

5. The system according to any one of claims 1 to 4, wherein the pressure P1 ranges from 4 bar to 16 bar.

6. The system according to any one of claims 1 to 5, further comprising a tail gas treatment unit located downstream from an absorption tower **(41)** and/or downstream from a tail gas expander **(7).**

7. A method for evacuating NOₓ gases from a nitric acid storage tank **(2)** in a nitric acid production plant, wherein a first NOₓ-containing gas from a gas conduit of the nitric acid production plant a at a pressure P1 ranging from 2 bar to 16 bar and a second NOₓ-containing gas from the nitric acid storage tank **(2)** at atmospheric pressure are respectively flown in through a first inlet **(11)** and a second inlet **(12)** of a gas ejector **(10)** and flown out to a gas conduit of the nitric acid production plant through which a NOₓ-containing gas is flowing at a pressure P2 which is lower than P1.

8. Method according to claim 7 wherein the first NOₓ-containing gas is a tail gas **(5)** obtained from an outlet **(6)** of an absorption tower **(41)** and wherein the outflowing gas stream of the gas ejector **(10)** flows to a gas conduit downstream from a tail gas expander **(7)** for expanding the tail gas **(5)** and/or downstream from a tail gas heater **(43)** for heating the tail gas **(5)** to a temperature ranging from 200 to 650°C, thereby generating a heated tail gas **(49).**

9. Method according to claim 7 wherein the first NOₓ-containing gas is obtained from a gas conduit downstream from a tail gas heater **(43)** for heating a tail gas **(5)** obtained from an outlet **(6)** of an absorption tower **(41)** to a temperature ranging from 200 to 650°C, thereby generating a heated tail gas **(49),** and wherein the outflowing gas stream of the gas ejector **(10)** flows to a gas conduit downstream from a tail gas expander **(7)** for expanding the heated tail gas **(49).**

10. Method according to claim 7 wherein the first NOₓ-containing gas is obtained from a gas conduit downstream from a NOₓ gas compressor **(40)** and upstream from an absorption tower **(41),** and wherein the outflowing gas stream of the gas ejector **(10)** flows to a gas conduit upstream from the NOₓ gas compressor **(40).**

11. Method according to any one of claims 7 to 10, wherein the pressure P1 ranges from 4 bar to 16 bar.

12. Method according to any one of claims 7 to 11, further comprising the step of treating a tail gas (5) downstream from an absorption tower **(41)** and/or downstream from a tail gas expander **(7).**

13. Method according to any one of claims 7 to 11, wherein the method is a periodical or continuous process.

14. A method for revamping a nitric acid production plant comprising the step of installing a gas ejector **(10)** for executing the method according to any of claims 7 to 13.

15. Use of a gas ejector **(10)** for evacuating NOₓ gases from a nitric acid storage tank **(2),** in a production plant for producing nitric acid.
